# EUROPEAN PATENT APPLICATION

(11) **EP 3 232 398 A1**
(43) Date of publication of application: **18.10.2017**
(21) Application number: 17156809.0
(22) Date of filing: 20.02.2017
(51) Int. Cl.: G06Q 50/26, G06T 7/30

(54) **MONITORING CONTROL SYSTEM FOR SECURITY CHECK AND MONITORING TERMINAL FOR SECURITY CHECK**

(30) Priority: 13.04.2016 CN 201610227788
(71) Applicant: Nuctech Company Limited, TongFang Building, Shuangqinglu, Haidian District Beijing 100084 (CN)
(72) Inventor: ZOU, Qiang, Haidian District, Beijing 100084 (CN); WANG, Tao, Haidian District, Beijing 100084 (CN); TIAN, Long, Haidian District, Beijing 100084 (CN); HU, Chifeng, Haidian District, Beijing 100084 (CN)
(74) Representative: Boult Wade Tennant

(57) **Abstract**

The present disclosure discloses a monitoring control system for security check and a monitoring terminal for security check. The monitoring control system for security check (130, 300) comprises: a receiver (210); a transmitter (220); an image data processing unit (230), connected between the receiver (210) and the transmitter (220), and configured to process image data; and an image control unit (240), connected to the receiver (210), the transmitter (220), and the image data processing unit (230), and configured to control receiving of the image data from a plurality of security check machines (110) by the receiver (210); processing of the received image data by the image data processing unit (230); and sending of the processed image data to a plurality of monitoring terminals by the transmitter (220).

## Description

### TECHNICAL FIELD

The present disclosure relates to the field of monitoring for security check, and particularly to a monitoring control system for security check and a monitoring terminal for security check.

### BACKGROUND

In recent years, the anti-terrorism situation gets more severe, which makes higher requirements on the security check technique, so that security in densely populated transportation transfer stations, such as airports and railway stations, can be better ensured. Here, it is most important to guarantee security in airports. After the 911 incident, various countries in the world have strengthened the security check in airports to avoid letting off any escaped criminal. Generally, passengers are required to let their luggage be checked at three gateways, i.e., airport security check, customs security check, and inspection and quarantine, before successful boarding. At the present stage, this is achieved mainly in the following two modes.
1. The airport, the customs, and the quarantine department perform the security check by using the security check equipment provided by the airport, and the three departments check passing luggage using the same monitoring signals acquired by the same security check equipment.
2. The airport, the customs, and the quarantine department purchase the security check equipment separately, and provide staff to check luggage to be checked, independently.

However, the two modes have the following disadvantages.

In the first mode, the airport security staff acts as the major operators, and it is impossible for the customs and the inspection and quarantine department to make direct operations on monitoring signals at their monitoring terminals, resulting in that dangerous situations possibly cannot be cleared immediately and accurately.

In the second mode, both the customs and the inspection and quarantine department are provided with the security check equipment, respectively, which may cause wastes of state funds and manpower resources, and also lead to expansion of the occupied areas and increase of the security check time, and further potentially cause crowding of passengers; thus, unwanted problems and hazards will be present.

### SUMMARY

In order to solve the above problems in the prior art, the present disclosure provides a monitoring control system for security check and a monitoring terminal for security check.

According to one aspect of the present disclosure, a monitoring control system for security check is provided, which comprises a receiver; a transmitter; an image data processing unit, connected between the receiver and the transmitter, and configured to process image data; and an image control unit, connected to the receiver, the transmitter, and the image data processing unit, and configured to control: receiving of the image data from a plurality of security check machines by the receiver; processing of the received image data by the image data processing unit; and sending of the processed image data to a plurality of monitoring terminals by the transmitter.

Preferably, the image control unit is further configured to receive a security check machine selection instruction from at least one of the plurality of monitoring terminals, respectively; and the sending of the processed image data to the plurality of monitoring terminals by the transmitter comprises: based on the instruction, sending the processed image data from at least one of the plurality of security check machines to the corresponding monitoring terminals, respectively.

Preferably, the image processing unit comprises at least one of the following modules: an image stitching module, configured to stitch the image data into a complete image when the image data corresponds to pictures; a video stream module, configured to decode the image data when the image data is video stream data; and an image rendering module, configured to perform image rendering on the image data.

Preferably, the image rendering comprises super enhancement and/or high-energy penetration.

Preferably, the image control unit further receives an image rendering instruction from at least one of the plurality of monitoring terminals respectively, and the image control unit is further configured to perform control such that: the image rendering module performs the image rendering on the received image data based on the image rendering instruction.

Preferably, the system further comprises an equipment control unit, connected to the receiver and the transmitter, and configured to receive from at least one of the plurality of monitoring terminals a security check machine control command, and forward the security check machine control command to a target security check machine so as to control an operation of the target security check machine.

Preferably, the operation comprises at least one of the following operations: increasing belt speed, decreasing the belt speed, stopping belt running, starting the belt running, reversing the belt, power off of the security check machine, power on of the security check machine, initiating an alarm, and/or flashing a warning light.

Preferably, the security check machine control command is sent to the target security check machine through a serial port or a socket communication.

According to another aspect of the present disclosure, a monitoring terminal for security check is provided, which comprises a transceiver, configured to receive image data from a plurality of security check machines; a display unit, connected to the transceiver, and configured to display images generated based on the image data, the display unit comprising a first display portion and a second display portion; and a control unit, connected to the transceiver and the display unit, and configured to display, according to a first user input, an image generated based on the image data from one of the plurality of security check machines on the first display portion and images generated based on the image data from other security check machines on the second display portion.

Preferably, the control unit is further configured to perform at least one of the following operations: generating, according to a second user input, a security check machine selection instruction by which the selection of one or more security check machines from the plurality of security check machines is triggered, such that the transceiver receives only the image data from the selected one or more security check machines; generating, according to a third user input, an image rendering instruction by which rendering to the image data is triggered; and generating, according to a fourth user input, a security check machine control command by which an operation of a target security check machine is triggered.

Preferably, the first user input, the second user input, the third user input, and the fourth user input are received by the display unit.

Preferably, the image rendering comprises super enhancement and/or high-energy penetration.

Preferably, the operation comprises at least one of the following operations: increasing belt speed, decreasing the belt speed, stopping belt running, starting the belt running, reversing the belt, power off of the security check machine, power on of the security check machine, initiating an alarm, and/or flashing a warning light.

Preferably, the first display portion and the second display portion are implemented as separate display screens.

Preferably, the control unit is further configured to: interchange, according to a fifth user input, display areas of images that are generated based on the image data from two of the plurality of security check machines, respectively.

By adopting the monitoring control system for security check and the monitoring terminal for security check proposed by the present disclosure, a plurality of security check departments can control monitoring signals at their own security check terminals respectively, and also can simultaneously monitor and operate a plurality of security check machines by a single terminal. Thus, not only level and efficiency of the security check can be improved, but also sufficient resource utilization and sharing can be realized. By virtue of the solution of the present disclosure, seamless integration with the existing security check system can be realized.

### BRIEF DESCRIPTION OF THE DRAWINGS

FIG. 1 shows an architecture of a monitoring system for security check according to the present disclosure;
FIG. 2 shows a structural block diagram of a monitoring control system for security check according to some implementations of the present disclosure;
FIG. 3 shows a structural block diagram of a monitoring terminal for security check according to some implementations of the present disclosure; and
FIG. 4 shows a schematic diagram of a first display portion and a second display portion of a security check monitoring terminal according to some implementations of the present disclosure.

### DETAILED DESCRIPTION

The present disclosure will be described in detail below with reference to the accompanying drawings.

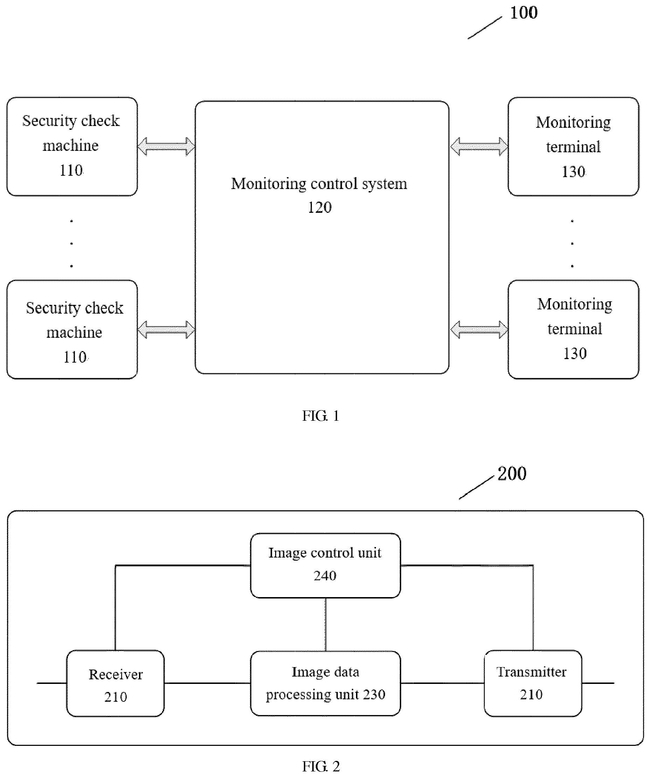

FIG. 1 shows an architecture of a monitoring system for security check 100 according to the present disclosure. The monitoring system for security check 100 includes a plurality of security check machines 110, a plurality of monitoring terminals 130, and a monitoring control system 120 connected therebetween. The security check machines 110 send the acquired image data for security check to the monitoring control system 120, and the image data for security check is sent by the monitoring control system 120 to each of the monitoring terminals 130, after being processed by the monitoring control system 120. In addition, the monitoring control system 120 can receive from the monitoring terminals 130 control signals that are used for sending of the image data by the monitoring control system 120. The monitoring terminals 130 can also send control signals to the security check machines 110 via the monitoring control system 120 so as to control the security check machines 110 to perform various operations.

Preferably, the monitoring control system 120 communicates with the security check machines 110 through a TCP/IP protocol.

It should be understood that any number of security check machines 110 and any number of monitoring terminals 130 may be used according to actual requirements, although only two security check machines 110 and two monitoring terminals 130 are shown in FIG. 1.

Next, reference is made to FIG. 2. FIG. 2 shows a structural block diagram of a monitoring control system 200 according to some implementations of the present disclosure. The monitoring control system 200 includes: a receiver 210, a transmitter 220, an image data processing unit 230 and an image control unit 240.

The receiver 210 is connected to a plurality of security check machines (not shown in FIG. 2), and configured to receive image data from the security check machines. The transmitter 220 is connected to a plurality of monitoring terminals (not shown in FIG. 2), and configured to send the image data to the monitoring terminals. The image data processing unit 230 is connected between the receiver 210 and the transmitter 220, and configured to process the image data received by the receiver 210. The image control unit 240 is connected to the receiver 210, the transmitter 220, and the image data processing unit 230. The receiver 210, under the control of the image control unit 240, first receives the image data from each of the plurality of security check machines respectively, and then transmits the received image data to the image data processing unit 230 where the image data is processed. The image data processing unit 230 transmits the processed image data to the transmitter 220, by which the processed image data is sent to the plurality of monitoring terminals.

In some implementations, the image control unit 240 controls the image data processing unit 230 by means of instructions received from the monitoring terminals.

In some preferred implementations, the image control unit 240 receives a security check machine selection instruction from the monitoring terminals. The instruction is used to select the security check machines of interest for the monitoring terminals from all the security check machines, and requires the control system to send only the image data from the security check machines of interest to the corresponding monitoring terminals. The image control unit 240 can receive the instruction from one monitoring terminal, and also can receive the instructions from the plurality of monitoring terminals at the same time, and perform customized operations specified by the respective instructions.

In some implementations, the image control unit 240 includes at least one of an image stitching module, a video stream module, and an image rendering module.

The image stitching module is configured to stitch the image data into a complete image when the image data corresponds to pictures. In this case, the image can be displayed in a scroll display mode. In such a display mode, the image can be displayed in real-time with a higher level, so that there is almost no time delay between an image displayed on a certain terminal and an image acquired by the corresponding security check machine. Specifically, in practice, the security check machines can push each column of generated images of luggage to the image stitching module through a network while scanning the luggage. The image stitching module then obtains a complete image by stitching.

The video stream module is configured to decode the image data when the image data is video stream data. In this case, the video stream module decodes coded video stream by means of a decoder (which can be external), and sends the decoded video stream to the terminals, where the decoded video stream is played. In practice, an external H264 video coder may be used to code the video outputs of VGA (Video Graphics Array) from the security check machines into video streams of RTSP (Real Time Streaming Protocol), that are then transmitted to the video stream module through the network so as to be decoded.

The image rendering module is configured to perform image rendering on the image data. The image rendering includes customary used image processing methods and techniques in the security check field, such as super enhancement, high-energy penetration, and the like, in an attempt at helping an operator to increase the image discrimination accuracy rate. In practice, different rendering results can be generated by calling image algorithms of OpenGL (Open Graphics Library) inside the system to process and render images.

In some preferred implementations, the image control unit 240 controls the image rendering module to perform rendering by receiving rendering instructions from the monitoring terminals. The rendering instructions indicate specific rendering modes for specific image data from specific security check machines, and require the image rendering module to perform image rendering on the received image data according to the rendering instructions.

In some implementations, the image processing unit 240 may further include a buffer and/or a memory so as to buffer and/or store the received image data.

In some implementations, the image processing unit 240 further includes an equipment control unit. The equipment control unit is connected to the receiver 210 and the transmitter 220, and configured to receive from at least one of the plurality of monitoring terminals a security check machine control command. The equipment control unit then forwards the security check machine control command to a target security check machine, to which the control command is directed, so as to control an operation of the target security check machine.

The operation includes at least one of the following operations: increasing belt speed, decreasing the belt speed, stopping belt running, starting the belt running, reversing the belt, power off of the security check machine, power on of the security check machine, initiating an alarm, and/or flashing a warning light.

Preferably, the security check machine control command is sent to the target security check machine through a serial port or a socket communication.

In some implementations, the image control unit 240 receives various instructions and control commands from the monitoring terminals by means of the receiver 210 (i.e., the receiver 210 is also connected to the monitoring terminals). However, in other implementations, the image control unit 240 can receive various instructions and control commands from the monitoring terminals by means of other receivers of the monitoring control system 200. Similarly, the image control unit 240 sends various instructions and control commands to the security check machines by means of the transmitter 220 (i.e., the transmitter 220 is also connected to the monitoring terminals). Nevertheless, in other implementations, the image control unit 240 can send various instructions and control commands to the security check machines by means of other transmitters of the monitoring control system 200.

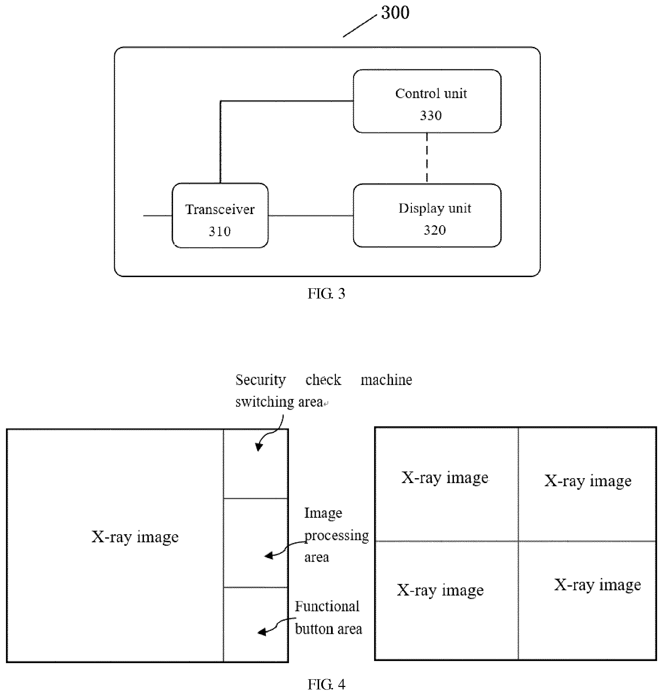

Next, reference is made to FIG. 3. FIG. 3 shows a structural block diagram of a monitoring terminal 300 according to some implementations of the present disclosure. The monitoring terminal 300 includes a transceiver 310, a display unit 320, and a control unit 330.

The transceiver 310 is configured to receive image data from a plurality of security check machines. In some implementations, the transceiver 310 is connected to a monitoring control system, such as the monitoring control system 200 as shown in FIG. 2.

The display unit 320 is connected to the transceiver 310, and configured to display images generated based on the image data. The display unit 320 includes a first display portion and a second display portion (as shown in FIG. 4, the left figure of FIG. 4 shows an example of the first display portion, while the right figure thereof shows an example of the second display portion).

The control unit 330 is connected to the transceiver 310 and the display unit 320. The control unit 330 is configured to display, according to a first user input, an image generated based on the image data from one of the plurality of security check machines on the first display portion and images generated based on the image data from other security check machines on the second display portion.

The first user input is made by a user on the display unit 320, such as by way of touching a touch screen. In other embodiments, the first user input may be made by means of other input devices, such as a mouse, a keyboard, a microphone, and the like.

In some implementations, the control unit 330 is further configured to perform at least one of the following operations: a security check machine selection instruction, an image rendering instruction, and a security check machine control command.

The security check machine selection instruction is generated according to a second user input, and used for triggering selection of one or more security check machines from the plurality of security check machines, such that the transceiver receives only the image data from the selected one or more security check machines.

The image rendering instruction is generated according to a third user input, and used for triggering rendering to the image data. Preferably, the image rendering includes super enhancement and/or high-energy penetration.

The security check machine control command is generated according to a fourth user input, and used for triggering an operation of a target security check machine. Preferably, the operation includes at least one of the following operations: increasing belt speed, decreasing the belt speed, stopping belt running, starting the belt running, reversing the belt, power off of the security check machine, power on of the security check machine, initiating an alarm, and/or flashing a warning light.

The second user input, the third user input, and/or the fourth user input can be made by a user on the display unit 320, such as by way of touching a touch screen. In other implementations, the first user input can be made by means of other input devices, such as a mouse, a keyboard, a microphone, and the like.

FIG. 4 shows examples of the first display portion (the left figure) and the second display portion (the right figure) of the display unit 320 which perform the display in manners as described above. As shown in the left figure, the first display portion includes an X-ray image area, a security check machine switching area, an image processing area, and a functional button area. The X-ray image area corresponds to the image generated based on the image data from one of the plurality of security check machines, and the three other areas correspond to control areas. A user can input one or more of the first, second, third and fourth user inputs by touching the respective control areas, of which the specific functions are not described in detail herein.

In the right figure, the second display portion includes four different X-ray image areas, which correspond to the images generated based on the image data from four other security check machines, respectively.

In some implementations, the control unit 330 may be triggered by user inputs to change the contents displayed in different areas and/or interchange the displayed contents among different areas. For example, the control unit 330 may interchange, according to a fifth user input, display areas of the images that are generated based on the image data from two of the plurality of security check machines, respectively.

In a preferred implementation, the first display portion and the second display portion are implemented as separate display screens.

Although the present disclosure is already shown above in conjunction with the preferred implementations of the present disclosure, it will be understood by those skilled in the art that various modifications, substitutions and changes can be made to the present disclosure without departing from the spirit and scope of the present disclosure. Therefore, the present disclosure should be defined by the appended claims and equivalents thereof, instead of the above implementations.

## Claims

1. A monitoring control system for security check (120, 200), **characterized in that**, comprising:
a receiver (210);
a transmitter (220);
an image data processing unit (230), connected between the receiver (210) and the transmitter (220), and configured to process image data; and
an image control unit (240), connected to the receiver (210), the transmitter (220), and the image data processing unit (230), and configured to control:
receiving of the image data from a plurality of security check machines (110) by the receiver (210);
processing of the received image data by the image data processing unit (230); and
sending of the processed image data to a plurality of monitoring terminals (130, 300) by the transmitter (220).

2. The system according to claim 1, **characterized in that**, the image control unit (240) is further configured to receive a security check machine selection instruction from at least one of the plurality of monitoring terminals (130, 300), respectively; and
the sending of the processed image data to the plurality of monitoring terminals (130, 300) by the transmitter (220) comprises: based on the instruction, sending the processed image data from at least one of the plurality of security check machines (110) to the corresponding monitoring terminals (130, 300), respectively.

3. The system according to claim 1 or 2, **characterized in that**, the image data processing unit (230) comprises at least one of the following modules:
an image stitching module, configured to stitch the image data into a complete image when the image data corresponds to pictures;
a video stream module, configured to decode the image data when the image data is video stream data; and
an image rendering module, configured to perform image rendering on the image data.

4. The system according to claim 3, **characterized in that**, the image rendering comprises super enhancement and/or high-energy penetration.

5. The system according to claim 3, **characterized in that**, the image control unit (240) further receives an image rendering instruction from at least one of the plurality of monitoring terminals (130, 300) respectively, and the image control unit (240) is further configured to perform control such that:
the image rendering module performs the image rendering on the received image data based on the image rendering instruction.

6. The system according to claim 1, **characterized in that**, further comprising:
an equipment control unit, connected to the receiver (210) and the transmitter (220), and configured to receive from at least one of the plurality of monitoring terminals (130, 300) a security check machine control command, and forward the security check machine control command to a target security check machine (110) so as to control an operation of the target security check machine (110).

7. The system according to claim 6, **characterized in that**, the operation comprises at least one of the following operations: increasing belt speed, decreasing the belt speed, stopping belt running, starting the belt running, reversing the belt, power off of the security check machine, power on of the security check machine, initiating an alarm, and/or flashing a warning light.

8. The system according to claim 6, **characterized in that**, the security check machine control command is sent to the target security check machine (110) through a serial port or a socket communication.

9. A monitoring terminal for security check (130, 300), **characterized in that**, comprising:
a transceiver (310), configured to receive image data from a plurality of security check machines (110);
a display unit (320), connected to the transceiver (310), and configured to display images generated based on the image data, the display unit (320) comprising a first display portion and a second display portion; and
a control unit (330), connected to the transceiver (310) and the display unit (320), and configured to display, according to a first user input, an image generated based on the image data from one of the plurality of security check machines (110) on the first display portion and images generated based on the image data from other security check machines (110) on the second display portion.

10. The monitoring terminal for security check (130, 300) according to claim 9, **characterized in that**, the control unit (330) is further configured to perform at least one of the following operations:
generating, according to a second user input, a security check machine selection instruction by which the selection of one or more security check machines (110) from the plurality of security check machines (110) is triggered, such that the transceiver (310) receives only the image data from the selected one or more security check machines (110);
generating, according to a third user input, an image rendering instruction by which rendering to the image data is triggered; and
generating, according to a fourth user input, a security check machine control command by which an operation of a target security check machine (110) is triggered.

11. The monitoring terminal for security check (130, 300) according to claim 9, **characterized in that**, the first user input is received by the display unit (320), and preferably, the second user input, the third user input, and the fourth user input are received by the display unit (320).

12. The monitoring terminal for security check (130, 300) according to claim 10, **characterized in that**, the image rendering comprises super enhancement and/or high-energy penetration.

13. The monitoring terminal for security check (130, 300) according to claim 10, **characterized in that**, the operation comprises at least one of the following operations: increasing belt speed, decreasing the belt speed, stopping belt running, starting the belt running, reversing the belt, power off of the security check machine, power on of the security check machine, initiating an alarm, and/or flashing a warning light.

14. The monitoring terminal for security check (130, 300) according to claim 9, **characterized in that**, the first display portion and the second display portion are implemented as separate display screens.

15. The monitoring terminal for security check (130, 300) according to claim 9, **characterized in that**, the control unit (330) is further configured to:
interchange, according to a fifth user input, display areas of images that are generated based on the image data from two of the plurality of security check machines (110), respectively.
